# EUROPÄISCHE PATENTSCHRIFT

(11) **EP 3 408 162 B1**
(45) Veröffentlichungstag und Bekanntmachung des Hinweises auf die Patenterteilung: **29.01.2020**
(21) Anmeldenummer: 16823240.3
(22) Anmeldetag: 19.12.2016
(51) Int. Cl.: B62D 29/00, C21D 1/18

(54) **VERFAHREN ZUR HERSTELLUNG EINES BAUTEILS UND NACH DIESEM VERFAHREN HERGESTELLTES BAUTEIL**
METHOD FOR PRODUCING A COMPONENT AND COMPONENT PRODUCED ACCORDING TO SAID METHOD
PROCÉDÉ POUR PRODUIRE UN ÉLÉMENT ET ÉLÉMENT PRODUIT AU MOYEN DE CE PROCÉDÉ

(30) Priorität: 26.01.2016 DE 102016201036
(43) Veröffentlichungstag der Anmeldung: 05.12.2018
(73) Patentinhaber: ZF Friedrichshafen AG, 88046 Friedrichshafen (DE)
(72) Erfinder: BRONSWICK, Philipp, 49179 Ostercappeln (DE); KUHLMANN, Sven, 49448 Lemförde (DE)
(86) Internationale Anmeldenummer: PCT/EP2016/081663
(87) Internationale Veröffentlichungsnummer: WO 2017/129320

(56) Entgegenhaltungen:
- WO-A1-2010/094538
- DE-A1-102007 018 459
- DE-A1-102012 100 786
- DE-U1-202010 002 099
- STEINHOFF K ET AL: "Verbessertes Festigkeits-/Dehnungs-Verhältnis durch modifizierte Wärmebehandlung hochfester Vergütungsstähle vom Typ 22MnB5", NEUERE ENTWICKLUNGEN IN DER BLECHUMFORMUNG: VORTRAGSTEXTE ZURVERANSTALTUNG INTERNATIONALE KONFERENZ, X, XX, 9. Mai 2006 (2006-05-09), Seiten 185-206, XP009093702,

## Beschreibung

Die Erfindung bezieht sich auf ein Verfahren zum Herstellen eines Bauteils, das aus mindestens zwei Einzelbauteilen besteht, die miteinander verbunden werden, insbesondere Fahrwerksbauteile für Kraftfahrzeuge, wobei das eine Einzelbauteil ein Blechbauteil ist und durch Presshärten hergestellt und das jeweils andere Einzelbauteil durch ein konventionelles Herstellverfahren ohne Presshärtung hergestellt wird sowie auf ein nach diesem Verfahren hergestelltes Bauteil.

Ein derartiges Verfahren ist aus der DE 20 2010 002 099 U1 bekannt. Hierbei wird ein Verbundbauteil in der Ausbildung als ein Karosserieteil hergestellt, welches anschließend mit üblichen Fügetechniken, insbesondere Schweißen, ins Kraftfahrzeug eingebunden wird.

Auch der WO 2010/094538 A1 ist die Herstellung eines vergleichbaren Bauteils zu entnehmen, dass für Kraftfahrzeugkarosserien oder Gehäuse eingesetzt werden kann.

Der DE 10 2012 100 786 A1 ist ein Verfahren zum Koppeln von zwei Bauteilen zu entnehmen. Hinsichtlich der konkreten Ausgestaltung ist den Figuren zu entnehmen, dass diese Bauteile plattenartig ausgebildet sein können.

Um bei Kraftfahrzeugen die Kraftstoffverbräuche zu senken, ist eine Vielzahl von Maßnahmen bekannt. Eine dieser Maßnahmen ist der Leichtbau der verwendeten Bauteile. Zum einen werden leichte Werkstoffe wie Aluminium verwendet, die daraus hergestellten Bauteile müssen aber verstärkt werden, wenn sie hohe Kräften/Momente aufnehmen müssen. Zum anderen werden zunehmend hochfeste Werkstoffe an besonders verformungsrelevanten Stellen in Kraftfahrzeugkarrosserien verwendet. Diese Werkstoffe sind aber aufwändig bei der Umformung. In der Regel werden aus ihnen hergestellten Bauteile durch Presshärten hergestellt. Das Press- oder Formhärten ist ein Verfahren, bei dem in einem Prozessschritt sowohl die spanlose Umformung als auch die Wärmebehandlung des Blechbauteils kombiniert werden. Dabei wird die über Austenitisierungstemperatur erwärmte Platine in ein gekühltes Umformwerkzeug eingebracht und anschließend abgeschreckt. Dadurch wird ein martensitisches Gefüge mit sehr hoher Zugfestigkeit erzeugt.

Aus der DE 10 2006 060 897 B4 ist es bekannt, Fahrwerksteile von Kraftfahrzeugen, insbesondere Querträger und Querlenker von Vorderachsenbaugruppen, als ein einziges pressgehärtetes Bauteil auszuführen. Um die gewünschten Festigkeitseigenschaften zu erreichen, ist der Härtungsgrad in verschiedenen Bereichen der Bauteile unterschiedlich.

Die so hergestellten Fahrwerksteile sind zum einen sehr kostenintensiv. Zum anderen wird mit dem einteiligen Bauteil in der Regel die erforderliche Steifigkeit nicht erreicht.

Aus der DE 10 2009 020 423 A1 ist es bekannt, Fahrwerksteile von Kraftfahrzeugen aus mindestens zwei Blechbauteilen herzustellen, die miteinander verschweißt werden. Die Blechbauteile werden aus hochfesten Werkstoffen durch Presshärten hergestellt. Um eine Rissbildung, ausgehend von der Schweißnaht, zu vermeiden, wird hier vorgeschlagen, den Bereich der Schweißnaht in beiden Bauteilen nicht zu härten. Hierzu müssen während der Herstellung der Bauteile diese Bereiche der späteren Schweißnaht von einer Festigkeitserhöhung und/oder Härteerhöhung ausgenommen werden. Dies ist fertigungstechnisch kostspielig und zeitaufwändig.

Aufgabe der vorliegenden Erfindung ist es, die Fertigung eines aus mindestens zwei Einzelbauteilen bestehenden Bauteils, die miteinander verbunden werden, insbesondere Fahrwerksbauteile für Kraftfahrzeuge, zu vereinfachen.

Diese Aufgabe wird durch die Merkmale des kennzeichnenden Teils des unabhängigen Patentanspruchs 1 gelöst. Die Merkmale des Patentanspruchs 9 beschreiben ein nach dem erfindungsgemäßen Verfahren hergestelltes Bauteil. Ausgestaltungen sind in den von diesem abhängigen Patentansprüchen wiedergegeben, welche jeweils für sich genommen oder in verschiedenen Kombinationen miteinander einen Aspekt der Erfindung darstellen können.

Die Erfindung beruht auf der Erkenntnis, dass die Fertigungskosten weiter gesenkt werden können, wenn nur eines der beiden Einzelbauteile durch Presshärten hergestellt und das andere Einzelbauteil auf andere Weise ohne Presshärten hergestellt wird. Dann muss nur ein Einzelbauteil die geforderte hohe Festigkeit/Härte aufweisen, während das andere Einzelbauteil in üblicher Weise hergestellt werden kann. Trotzdem kann das Gesamtbauteil so konzipiert werden, dass die geforderten Versagungsmechanismen (Knickkraftfenster, Beginn der plastischen Verformung aus den Gesamtfahrzeuganforderungen beim Einsatz in Fahrzeugen, Schadenskette und Crashperformance) durch das Presshärten, ggfs. durch partielles, unterschiedliches Härten beim Presshärten, erzielt werden. Das pressgehärtete Einzelbauteil kann, je nach Herstellparameter beim Presshärten, ggfs. unterschiedliche Festigkeiten und Duktilitäten aufweisen. Auch können variable Materialstärken eingestellt werden. Da das Presshärten eine maßgenaue Herstellung der Einzelbauteile erlaubt, ist eine Nacharbeit in der Regel nicht erforderlich.

Durch die Erfindung kann eine Gewichtsreduzierung der Bauteile jn Verbindung mit einer gleichzeitig steifen und festen Struktur erzielt werden. Weiterhin wird die Fertigungszeit bei der Herstellung reduziert, da nur ein Einzelbauteil durch Presshärten hergestellt wird. Auch können Fügeoperationen und Einzelteile vermieden werden, weil man die höhere Umformflexibilität des nicht pressgehärteten Einzelbauteils ausnutzen kann.

Eine Möglichkeit, das andere Einzelbauteil herzustellen, besteht darin, es aus Stahlblech herzustellen und konventionell kaltumzuformen. Hierbei kann es auch mehrstufig umgeformt werden und hierbei auch Aufnahmen zum Anbauen weiterer Bauelemente wie zum Beispiel Gummilager aufweisen.

Werden beide Einzelbauteile aus Stahlblech hergestellt, so bietet sich als Verbindungstechnik das Schweißen an. Dies ist eine einfache und bewährte Verbindungtechnik, die alle Anforderungen an das Gesamtbauteil gerecht wird. Als Schweißverfahren bieten sich das MIG-, MAG- oder das Laser-Schweißen an.

Um eine Rissbildung, ausgehend von dem Schweißnahtbereich im pressgehärteten Einzelbauteil, zu vermeiden, ist es sinnvoll, dass beim Presshärten der Bereich der Schweißnaht eine geringere Festigkeit und/oder Härte aufweist als die pressgehärteten Bereiche.

Anstelle eines Blechbauteils als anderes Einzelbauteil kann auch ein faserverstärktes Bauteil, insbesondere ein kohlefaserverstärktes Kunststoffbauteil, verwendet werden. Dadurch wird das Gewicht des Gesamtbauteils weiter reduziert, ohne dass seine Festigkeit leidet.

Anstelle des Schweißens können die Einzelbauteile auch miteinander verklebt werden. Dies bietet sich insbesondere dann an, wenn das andere Einzelbauteil ein Kunststoffbauteil ist.

Sinnvoll ist es, als erstes Einzelbauteil, das durch Presshärten hergestellt wird, das Einzelbauteil auszuwählen, das im Betrieb des Gesamtbauteils die auftretenden Kräfte/Momente aufnimmt und als anderes Einzelbauteil das Einzelbauteil auszuwählen, das primär der Versteifung des Gesamtbauteiles dient. Dieses wird dann bevorzugt durch konventionelles Kaltumformen hergestellt.

Alternativ kann das primär der Verstärkung dienende Einzelbauteil aus faserverstärktem Kunststoff hergestellt werden und erhält dann seine Form direkt bei seiner Herstellung aus Fasern und Matrix.

Das erfindungsgemäße Verfahren eignet sich besonders zur Herstellung von Fahrwerksstrukturbauteilen. Dann wird zum Beispiel bei einem radführenden Fahrwerksstrukturbauteil das Gesamtbauteil so aufgeteilt, dass ein Teil des Strukturbauteils pressgehärtet wird, um eine hohe Festigkeit bei gleichzeitig geringem Gewicht zu erzielen. Das andere Einzelbauteil dient dann primär der Verstärkung des Gesamtbauteils. Auch können hier die Aufnahmen für weitere Anbauteile wie Gummilager angebracht sein.

Die Erfindung ist nicht auf die angegebene Kombination der Merkmale des unabhängigen Patentanspruchs mit den von diesem abhängigen Patentansprüchen beschränkt. Es ergeben sich darüber hinaus weitere Möglichkeiten, einzelne Merkmale, insbesondere dann, wenn sie sich aus den Patentansprüchen, der nachfolgenden Beschreibung der Ausführungsbeispiele oder unmittelbar aus den Figuren ergeben, miteinander zu kombinieren. Außerdem soll die Bezugnahme der Patentansprüche auf die Figuren durch die Verwendung von Bezugszeichen den Schutzumfang der Patentansprüche auf keinen Fall auf die dargestellten Ausgestaltungsbeispiele beschränken.

Zur weiteren Erläuterung der Erfindung wird auf die Zeichnung verwiesen, in der zwei bevorzugte Ausführungsbeispiele vereinfacht dargestellt sind. Es zeigen:
- Fig. 1: eine perspektivische Ansicht eines Längslenker für ein Kraftfahrzeug, der aus einem ersten, pressgehärteten Einzelbauteil und einem zweiten zur Verstärkung dienenden, kaltumgeformten Einzelbauteil besteht,
- Fig. 2: eine perspektivische Ansicht eines Querlenkers für ein Kraftfahrzeug, der aus einem ersten, pressgehärteten Einzelbauteil und einem zweiten zur Verstärkung dienenden, kaltumgeformten Einzelbauteil besteht.

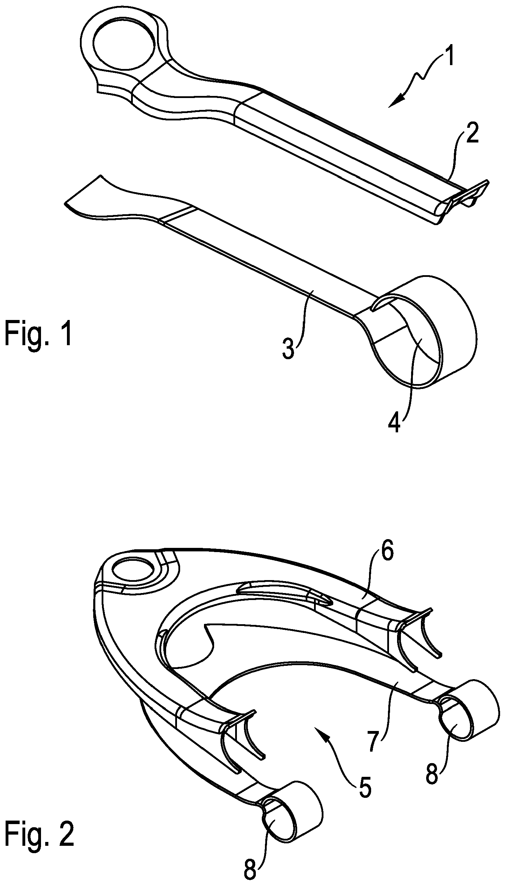

Der in Fig. 1 dargestellte Längslenker 1 für ein Kraftfahrzeug besteht aus den beiden Einzelbauteilen 2 und 3, wobei das Einzelbauteil 2 ein Strukturbauteil und das Einzelbauteil 3 als Verstärkungsbauteil fungiert.

Das Einzelbauteil 2 wird durch Presshärten aus einem gehärteten Stahl wie beispielsweise 22MnB5 hergestellt. Um eine möglichst geometrisch einfache Herstellung beim Presshärten zu erzielen, ist dieses Einzelbauteil 2 im Querschnitt u-förmig gebogen und damit nach unten hin offen. Es besitzt eine längliche, leicht abgewinkelte Ausdehnung. An seinem vorderen Ende ist eine Öffnung zur Aufnahme eines Anbauteils, beispielsweise eines Kugelkopfes. Das hintere Ende ist leicht nach oben abgeknickt.

Das Press- oder Formhärten ist ein Verfahren, bei dem in einem Prozessschritt sowohl die spanlose Umformung als auch die Wärmebehandlung des Blechbauteils kombiniert werden. Dabei wird die über Austenitisierungstemperatur erwärmte Blechplatine von einem gekühlten Umformwerkzeug aufgenommen und anschließend abgeschreckt. Dadurch wird ein martensitisches Gefüge mit sehr hoher Zugfestigkeit erzeugt.

Das Einzelbauteil 3 wird durch konventionelle Kaltumformung aus einem geeigneten Stahlblech hergestellt und folgt im Wesentlichen der Kontur des Einzelbauteils 2 Hierzu können mehrere Umformschritte erforderlich sein, die problemlos beim Kaltumformen durchführbar sind. Somit kann problemlos auch eine notwendige Lagerstelle 4 integriert werden, die in diesem Fall durch Einrollen eines freien Endes des Einzelbauteils 3 hergestellt wird. Die Lagerstelle 4 stützt sich zusätzlich dem leicht nach oben abgeknickten hinteren Ende des Einzelbauteils 2 ab.

Verbunden werden die beiden Einzelbauteile 2 und 3 zu einem im Querschnitt geschlossenen Profil durch eine Schweißverbindung, sei es eine Punkt-, Stepp- oder eine durchgehende Naht. Beim Schweißen eines pressgehärteten Bauteils ist zu beachten, dass ausgehend von der Schweißverbindung bei hohen dynamischen Belastungen sich Risse bilden können, die zu einem Versagen des Bauteils führen könnten. Um dies zu vermeiden, sollte der Bereich der Schweißverbindung an dem pressgehärteten Bauteil von der Härtung während seiner Herstellung ausgenommen werden.

In Fig. 2 ist als zweites Beispiel ein Querlenker eines Kraftfahrzeuges dargestellt. Dieser Querlenker 5 besteht ebenfalls aus zwei Einzelbauteilen 6 und 7, nämlich dem Strukturbauteil 6 und dem Verstärkungsbauteil 7.

Das Strukturbauteil 6 ist wiederum durch Presshärtung aus einem härtbaren Stahl, bevorzugt 22MnB5, hergestellt. Es besitzt eine möglichst geometrisch einfache Kontur, indem es einen u-förmigen Querschnitt aufweist, so dass es in einem Pressvorgang hergestellt werden kann. In seinem vorderen Bereich weist es eine Öffnung zur Aufnahme eines Anbauteils auf, zum Beispiel eines Achsschenkels.

Zu einem im Querschnitt geschlossenen Profil wird dieser Querlenker 5 durch eine Verbindung mit dem zweiten Einzelbauteil 7, das das u-förmige Profil von unten verschließt. Das Einzelbauteil 7 kann wiederum durch Kaltumformung aus eine geeigneten Stahlblech hergestellt werden. Es beinhaltet die erforderlichen Lagerstellen 8, die durch einen mehrteiligen Umformprozess erzeugt werden können. Die Lagerstellen stützen sich an maulförmigen Öffnungen an dem Strukturbauteil 6 ab, um eine größere Formbeständigkeit im Betrieb aufzuweisen.

Als Verbindungsverfahren kommt auch hier das Schweißen in Frage, wobei die Besonderheiten bei dem pressgehärteten Bauteil zu beachten sind, wie bereits oben dargelegt.
Anstelle eines zweiten Einzelbauteils aus Stahlblech kann auch ein anderer Werkstoff gewählt werden. Denkbar ist beispielsweise, diese Bauteil aus CFK herzustellen und dann mit dem ersten Einzelbauteil zu verkleben. Dies hätte den Vorteil, dass neben einer weiteren Gewichtserleichterung die Probleme des Schweißens eines pressgehärteten Bauteils vermieden würden. Damit sinken die Herstellkosten des pressgehärteten Bauteils.

### Bezugszeichen

- 1: Längslenker
- 2: Einzelbauteil von 1
- 3: Einzelbauteil von 1
- 4: Lagerstelle an 3
- 5: Querlenker
- 6: Strukturbauteil von 5
- 7: Verstärkungsbauteil von 5
- 8: Lagerstelle an 7

## Patentansprüche

1. Verfahren zum Herstellen eines Bauteils (1, 5), das aus mindestens zwei Einzelbauteilen (2 und 3, 6 und 7) besteht, die miteinander verbunden werden, wobei das eine Einzelbauteil (2, 6) ein Blechbauteil ist und im Rahmen des spanlosen Umformprozesses durch Presshärten hergestellt wird, und das jeweils andere Einzelbauteil (3, 7) durch ein konventionelles Herstellverfahren ohne Presshärtung hergestellt wird, **dadurch gekennzeichnet, dass** das Bauteil (1, 5) als ein radführendes Fahrwerksstrukturbauteil hergestellt wird.

2. Verfahren nach Patentanspruch 1, **dadurch gekennzeichnet, dass** das andere konventionell hergestellte Einzelbauteil (3, 7) ein Blechbauteil ist, das durch eine Kaltblechumformung hergestellt wird.

3. Verfahren nach Patentanspruch 1 oder 2, **dadurch gekennzeichnet, dass** die beiden Einzelbauteile (2 und 3 bzw. 6 und 7) miteinander verschweißt werden.

4. Verfahren nach Patentanspruch 3, **dadurch gekennzeichnet, dass** an dem pressgehärtete Einzelbauteil (2, 6) im Bereich der Schweißnaht eine geringere Festigkeit und/oder Härte eingestellt wird als in den pressgehärteten Bereichen.

5. Verfahren nach Patentanspruch 1, **dadurch gekennzeichnet, dass** das andere Einzelbauteil (3, 7) als CFK Bauteil hergestellt wird.

6. Verfahren nach einem der Patentansprüche 1, 2 oder 5, **dadurch gekennzeichnet, dass** die beiden Einzelbauteile (2 und 3, 6 und 7) miteinander verklebt werden.

7. Verfahren nach einem der vorangegangenen Patentansprüche, **dadurch gekennzeichnet, dass** das Einzelbauteil (2, 6), das im Wesentlichen die im Betrieb des Bauteils (1, 5) auftretenden Kräfte/Momente aufnimmt, als pressgehärtetes Blechbauteil hergestellt wird und das primär der Versteifung des Gesamtbauteils dienende andere Einzelbauteil (3, 7) durch Kaltumformen hergestellt wird.

8. Verfahren nach einem der vorangegangenen Patentansprüche 1 bis 6, **dadurch gekennzeichnet, dass** das Einzelbauteil (2, 6), das im Wesentlichen die im Betrieb des Bauteils (1, 5) auftretenden Kräfte/Momente aufnimmt, als pressgehärtetes Blechbauteil hergestellt wird und das primär der Versteifung des Gesamtbauteils dienende andere Einzelbauteil (3, 7) als CFK Bauteil hergestellt wird.

9. Bauteil, hergestellt nach einem der in den Patentansprüchen 1 bis 8 beschriebenen Verfahren, **dadurch gekennzeichnet, dass** es sich bei dem Bauteil (1, 5) um ein radführendes Fahrwerksstrukturbauteil handelt.

## Claims

1. Method for producing a component (1, 5) that consists of at least two individual components (2 and 3, 6 and 7) connected to one another, wherein the one individual component (2, 6) is a sheet-metal component and is produced by press-hardeninin the course of the non-cutting forming process g, and the respective other individual component (3, 7) is produced by a conventional production process without press-hardening, **characterized in that** the component (1, 5) is produced as a wheel-controlling chassis structure component.

2. Method according to Patent Claim 1, **characterized in that** the other, conventionally produced individual component (3, 7) is a sheet-metal component that is produced by cold sheet forming.

3. Method according to Patent Claim 1 or 2, **characterized in that** the two individual components (2 and 3 or 6 and 7) are welded to one another.

4. Method according to Patent Claim 3, **characterized in that** a lower strength and/or hardness is set on the press-hardened individual component (2, 6) in the region of the weld seam than in the press-hardened regions.

5. Method according to Patent Claim 1, **characterized in that** the other individual component (3, 7) is produced as a CFRP component.

6. Method according to one of Patent Claims 1, 2 or 5, **characterized in that** the two individual components (2 and 3, 6 and 7) are adhesively bonded to one another.

7. Method according to one of the preceding patent claims, **characterized in that** the individual component (2, 6) that substantially absorbs the forces/moments occurring during operation of the component (1, 5) is produced as a press-hardened sheet-metal component and the other individual component (3, 7) that primarily serves for stiffening of the component as a whole is produced by cold forming.

8. Method according to one of the preceding Patent Claims 1 to 6, **characterized in that** the individual component (2, 6) that substantially absorbs the forces/moments occurring during operation of the component (1, 5) is produced as a press-hardened sheet-metal component and the other individual component (3, 7) that primarily serves for stiffening of the component as a whole is produced as a CFRP component.

9. Component produced by one of the methods described in Patent Claims 1 to 8, **characterized in that** the component (1, 5) is a wheel-controlling chassis structure component.

## Revendications

1. Procédé de fabrication d'un composant (1, 5) comprenant au moins deux composants individuels (2 et 3, 6 et 7) qui sont reliés l'un à l'autre, l'un des composants individuels (2, 6) étant un composant en tôle et étant produit par durcissement à la presse pendant le processus de formage sans formation de copeaux, et l'autre composant individuel respectif (3, 7) étant produit par un procédé de production classique sans durcissement à la presse, **caractérisé en ce que** le composant (1, 5) est produit sous la forme d'un composant structurel de mécanisme de roulement pour le guidage de roue.

2. Procédé selon la revendication 1, **caractérisé en ce que** l'autre composant individuel (3, 7), produit de manière conventionnelle, est un composant en tôle qui est produit par formage de tôle à froid.

3. Procédé selon la revendication 1 ou 2, **caractérisé en ce que** les deux composants individuels (2 et 3 ou 6 et 7) sont soudés l'un à l'autre.

4. Procédé selon la revendication 3, **caractérisé en ce que** l'on ajuste le composant individuel (2, 6), durci à la presse, pour qu'il ait dans la région du cordon de soudure une résistance et/ou une dureté inférieures à celles dans les régions durcies à la presse.

5. Procédé selon la revendication 1, **caractérisé en ce que** l'autre composant individuel (3, 7) est produit sous la forme d'un composant en HCF.

6. Procédé selon l'une des revendications 1, 2 ou 5, **caractérisé en ce que** les deux composants individuels (2 et 3, 6 et 7) sont collés ensemble.

7. Procédé selon l'une des revendications précédentes, **caractérisé en ce que** le composant individuel (2, 6), qui absorbe sensiblement les forces/couples se produisant pendant le fonctionnement du composant (1, 5), est réalisé sous la forme d'un composant en tôle durci à la presse et **en ce que** l'autre composant (3, 7) servant principalement au renforcement de tout le composant est produit par formage à froid.

8. Procédé selon l'une des revendications précédentes 1 à 6, **caractérisé en ce que** le composant individuel (2, 6), qui absorbe sensiblement les forces/couples se produisant pendant le fonctionnement du composant (1, 5), est produit sous la forme d'un composant en tôle durci à la presse et **en ce que** l'autre composant (3, 7) servant principalement au renforcement de tout le composant est produit sous la forme d'un composant en HCF.

9. Composant, produit selon l'un des procédés décrits dans les revendications 1 à 8, **caractérisé en ce que** le composant (1, 5) est un composant structurel de mécanisme de roulement pour le guidage de roue.
